(19) Europäisches Patentamt / European Patent Office / Office européen des brevets

(11) **EP 4 242 830 A1**

(12) **EUROPEAN PATENT APPLICATION**
published in accordance with Art. 153(4) EPC

(43) Date of publication:
**13.09.2023 Bulletin 2023/37**

(21) Application number: **20960940.3**

(22) Date of filing: **10.11.2020**

(51) International Patent Classification (IPC):
*G06F 8/20* (2018.01)          *G06F 8/30* (2018.01)
*G06F 9/44* (2018.01)

(52) Cooperative Patent Classification (CPC):
**G06F 8/20; G06F 8/30; G06F 9/44**

(86) International application number:
**PCT/RU2020/000595**

(87) International publication number:
**WO 2022/098253 (12.05.2022 Gazette 2022/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.11.2020 RU 2020136739**

(71) Applicant: **Limited Liability Company "Craft Systems"**
**Moscow, 121205 (RU)**

(72) Inventor: **GOLUBEV, Dmitry Alexeevich**
**Nizhnij Novgorod, 603104 (RU)**

(74) Representative: **Deambrogi, Edgardo et al**
**Jacobacci & Partners S.p.A.**
**Corso Emilia 8**
**10152 Torino (IT)**

(54) **SYSTEM AND METHOD FOR CREATING AND EXECUTING HIGHLY SCALED CLOUD APPLICATIONS**

(57)     The invention relates to the field of developing and executing web-based software applications. Claimed is a group of inventions, and more particularly a cloud system and a method for developing and executing web-based software applications. The cloud system consists of microservices that interact with one another by means of a software interface. Said microservices include: a metamodel service; a metadata management service; a meta-language cross compiler service capable of translating the source code of a meta-language that describes the business logic of the object of an application into an Erlang code and compiling the resulting Erlang code into a binary code for an Erlang virtual machine, which can be loaded and executed by an application execution service; a session management service; an application execution service; an external data interface service capable of working with external databases and web services; and an external API service. The metamodel service and the session management service are designed so that they can be supplemented by at least one service on a master-slave basis in order to distribute query-related load. The technical result is that of improving efficiency, providing horizontal scaling during the development and execution of applications and also simplifying the description of the business logic of applications by the use of a meta-language.

fig.2

**Description**

FIELD OF THE INVENTION

This technical solution relates to the development and implementation of web-based software applications. More specifically, the invention relates to methods of creating highly scalable cloud applications developed using software platforms.

PRIOR ART

A solution is known from US 10, 324, 690 B2, published on June 18, 2019, which describes a system and method for automatically generating enterprise software applications with a minimum of manual coding. The preferred embodiment provides a graphical design tool that models an application using Unified Model Language (UML), validates UML model, and automatically generates deployable application. The preferred embodiment also provides a framework of libraries that the target application can be build from.

A solution is known from US 7,735,062 B2 published on June 08, 2010, which describes a system and method for developing software applications. The claimed system and method allow creating visual models of applications, storing versions of software applications in a centralized repository, automatically generating and deploying software applications, defining dependencies between software applications, and automating and assisting the development of multiple, dependent software applications by multiple developers.

The solutions known in the prior art have a number of disadvantages, namely, they use XML format to store model descriptions, which can cause additional challenges for semantic analysis of relationships with other models and elements, since they can be stored in separate XML fragments in a relational database. The solutions known in the prior art have poor scalability. Also, the solutions known in the prior art for development and implementation of applications assume that the customer has a certain existing IT infrastructure to run the generated application, which is not relevant for use in Software As A Service (SaaS) mode, but rather appropriate for development and use in "on-premises" mode.

SUMMARY OF THE INVENTION

The technical task is to create a system and method for rapid development of highly scalable cloud applications that can be used in a SaaS model. A cloud system and a method for developing and implementing web-based software applications were created to address this technical task, as characterized in the following independent claims. Additional embodiments of the present invention are described in the dependent claims.

The technical result includes improved performance and the implementation of horizontal scaling in the development and implementation of applications, as well as a simplified description of the applications' business logic achieved through the use of metalanguage. In addition, the technical result involves the implementation of the claimed purpose.

The claimed result is achieved by building a cloud system for developing and implementing web-based software applications, which comprises microservices that communicate with each other through a software interface, and the said microservices are as follows:

a metamodel service including a metadata repository, and a metamodel interface service, wherein the said metamodel service can be augmented with at least one master-slave service for load balancing of queries;
a metadata management service comprising a web interface to handle metadata and communicates with the metadata service to receive and modify metadata, designed to provide user-friendly tools for handling metadata that make up the configuration of application modules; an implementation of a visual editor for building application interface forms; a visual editor for metalanguage source code; an implementation of mechanisms for handling versions of metadata described in the metalanguage, tools for translating metadata into other languages to localize applications;
a metalanguage cross-compiler service designed to allow translation of the metalanguage source code, that represents the business logic description of an application object, into Erlang code, a compilation of the resulting Erlang code into binary code for the Erlang abstract machine, which can be loaded and executed by the application runtime service;
session management service designed to allow user authorization, session creation, executor service search with required metadata, executor service initiation with required metadata, executor process and web interface creation, and augmentation with at least one master-slave service for load balancing of queries;
an application executor service designed to allow the loading and execution of applications stored in the system repository as a set of complex metaobjects, including a business logic description in the form of compiled binary code, within a particular user session, and which can be augmented by at least one service for load balancing of queries;
an external data interface service designed to allow using external databases and web services;
an external API service of the system.

In a specific embodiment of the proposed system, the metalanguage cross-compiler contains a lexer, a parser and an Erlang code generator.

In another specific embodiment of the proposed system, the application runtime service contains an executor core, a metadata cache, a web interface and runtime processes that are dynamically created on demand.

In another specific embodiment of the proposed system, the external data interface service is designed to allow using external databases through connectors tailored to the specifics of the relevant data source.

In another specific embodiment of the proposed system, the external data interface service is designed to allow a unified API to handle data or web services.

The claimed result is also achieved by implementing a method for developing and implementing web-based software applications, which includes the steps where:

application objects are described as metadata stored in a metadata repository, through a metadata management service and a metamodel service, using a compiling type metalanguage, wherein the application objects are described based on the metamodel class descriptions;

described metadata presented as a set of metaobjects containing properties, nested objects, and the source code of the metalanguage, that implements the events and procedures of the object, are converted into the Erlang code, wherein the source code of the metalanguage is compared with the language grammar and the list of lexemes is generated in the recognized language, and the obtained list of lexemes is syntactically parsed, and a syntax tree is built after parsing the lexemes, and a semantic analysis is carried out on the syntax tree built after parsing the lexemes, and the Erlang code is obtained by converting the source code of the metalanguage, and the obtained Erlang code is compiled into executable binary code for the Erlang abstract machine; and the resulting binary code is written to the system repository;

after running the resulting application, a session management service is used to create a session and search for the executor service with the required metadata, initiate the executor service with the required metadata, and create the executor process and the web interface;

binary code is run and executed from the system repository by using the executor service, wherein the binary code is executed directly on the Erlang abstract machine.

In a specific embodiment of the proposed system, the metamodel contains classes, subclasses, attributes, behavior, types, and subtypes.

In another specific embodiment of the proposed system, the description of object classes includes additional classes and inheritance of existing classes.

DESCRIPTION OF DRAWINGS

The embodiment of the invention will be described below in accordance with the accompanying drawings, which are presented to explain the essence of the invention and in no way limit the scope of the invention. The following drawings are attached to the application:

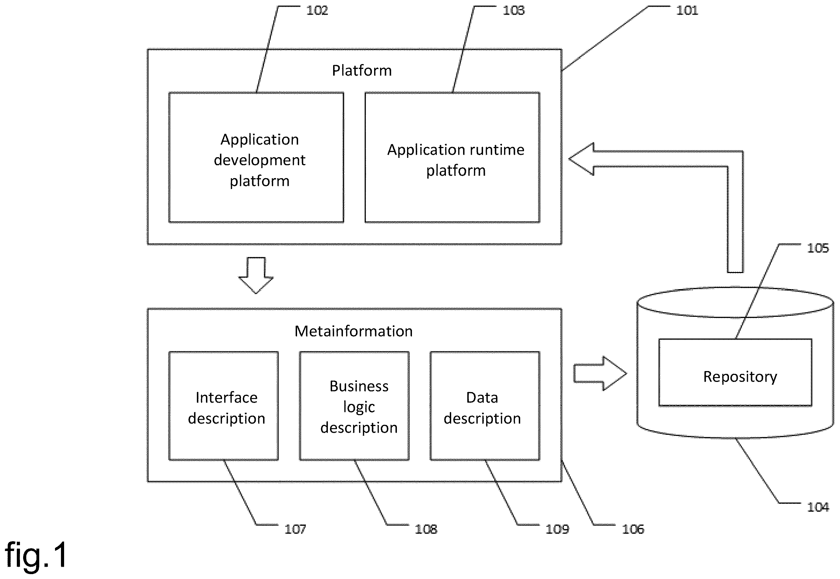

Fig. 1 presents the generic architecture of the proposed cloud system. Item 101 - software platform, item 102 - application development platform, item 103 - application runtime platform, item 104 - relational DBMS, item 105 - metadata repository, item 106 - metainformation, item 107 - interface description block, item 108 - business logic description block, item 109 - data description block.

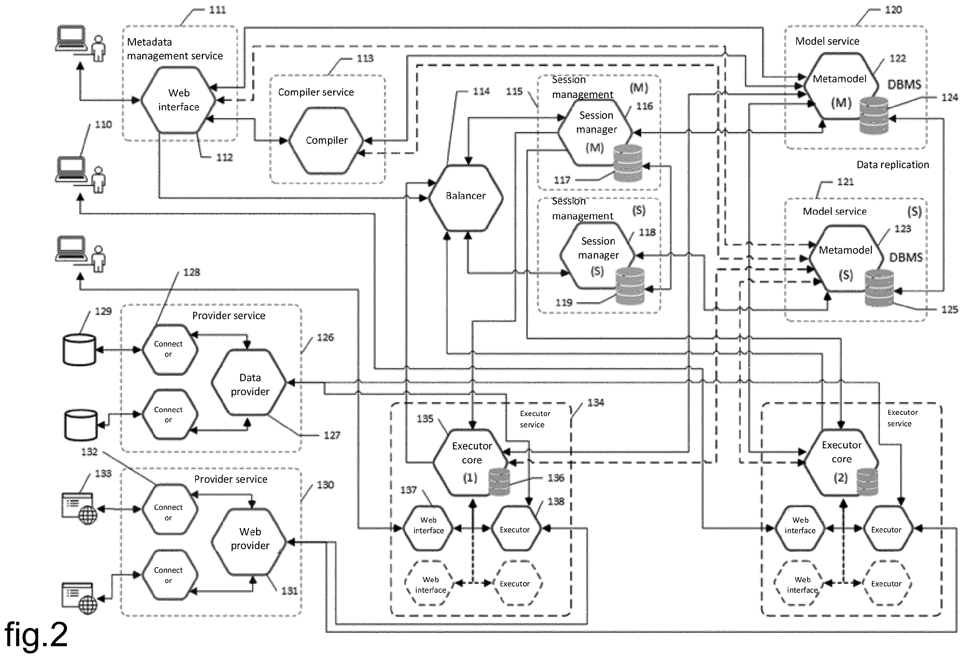

Fig. 2 presents the architecture of the proposed cloud system. Item 110 - system user, item 111 - metadata management service, item 112 - Designer's web interface, item 113 - cross compiler service, item 114 - balancer, item 115 - session management service, item 116 - main session manager, item 117 - main session table, item 118 - additional session manager, item 119 - additional session table, item 120 - main metamodel service, item 121 - additional metamodel service, item 122 - main metamodel, item 123 - additional metamodel, item 124 - model's main database, item 125 - model's additional database, item 126 - data provider service, item 127 - data provider, item 128 - database connector, item 129 - external database, item 130 - web provider service, item 131 - web provider, item 132 - web connector, item 133 - external web service, item 134 - executor service, item 135 - executor core, item 136 - metadata cache, item 137 - executor's web interface process, item 138 - executor's process.

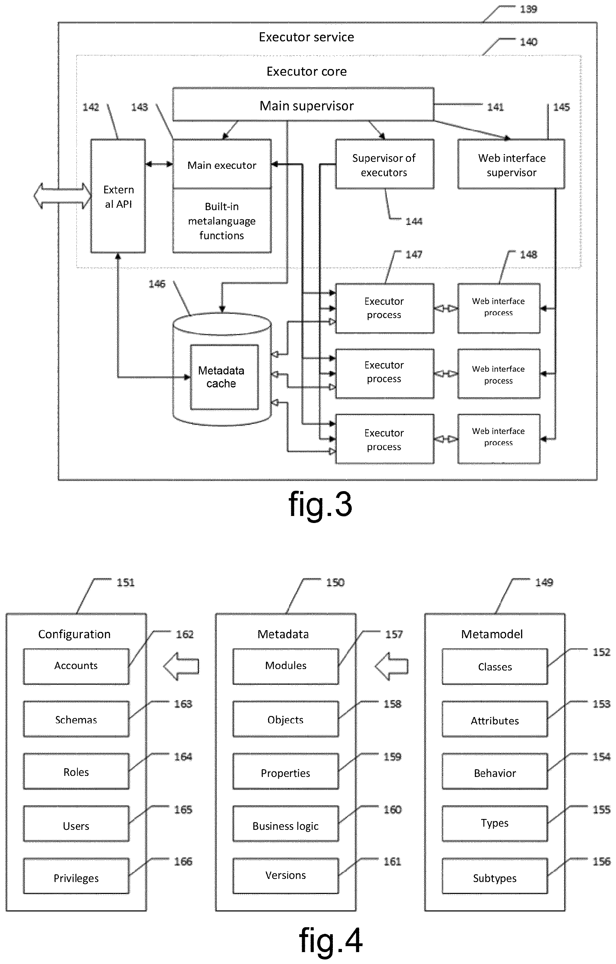

Fig. 3 presents an executor service schema. Item 139 - executor service, item 140 - executor core, item 141 - main supervisor, item 142 - external API, item 143 - main executor, item 144- supervisor of executors, item 145 - web interface supervisor, item 146 - metadata cache, item 147 - executor process, item 148 - web interface process.

Fig. 4 presents the generic structure of metadata. Item 149 - metamodel, item 150 - metadata, item 151 - configuration, item 152 - class description, item 153 - class attribute description, item 154 - class behavior description, item 155 - type description, item 156 - subtype description, item 157 - module description, item 158 - metaobject description, item 159 - object property description, item 160 - description of object business logic, item 161 - metaobject versions, item 162 - system accounts, item 163 - metadata schemas, item 164 - roles, item 165 - users, item 166- privileges.

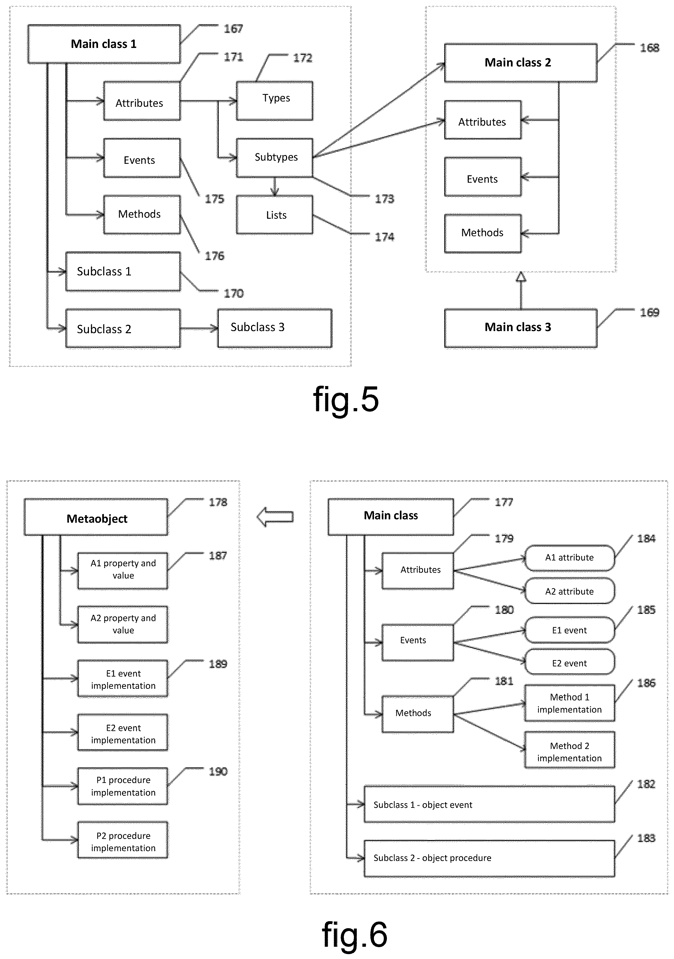

Fig. 5 presents a structure for description of metamodel class. item 167 - main class, item 168 - base main class, item 169 - child main class, item 170 - subclass, item 171 - class attributes, item 172 - value types, item 173 - attribute subtypes, item 174 - value lists, item 175 - class events, item 176 - class methods.

Fig. 6 presents a structure for description of metadata object, item 177 - main class, item 178 - metaobject, item 179- class attributes, item 180 - class events, item 181 - class methods, item 182 - subclass 1, item 183 - subclass 2, item 184 - A1 class attribute, item 185 - E1 class event, item 186 - class method implementation, item 187 - object property and value for A1 attribute, item 189 - E1 object event implementation, item 190 - P1 object procedure implementation.

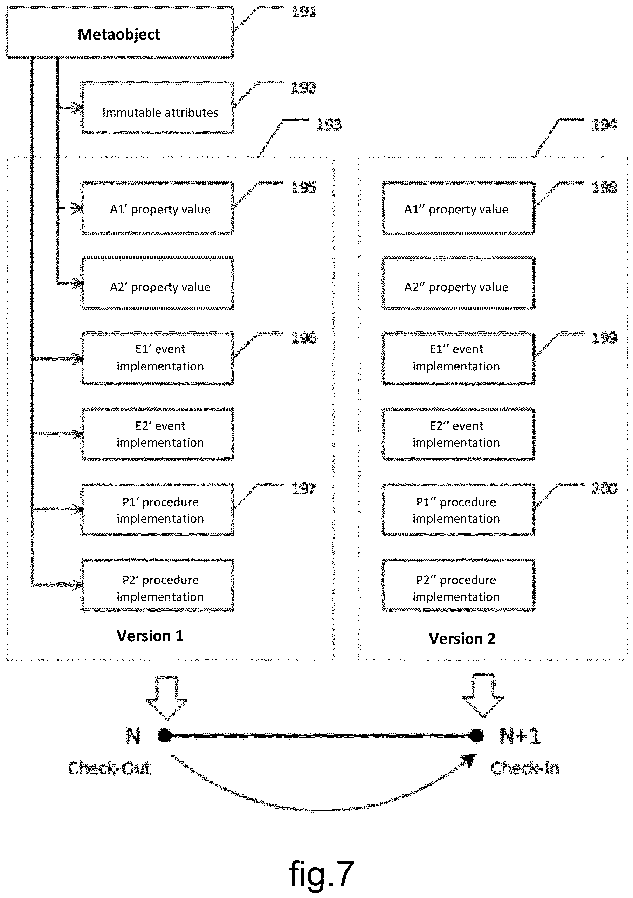

Fig. 7 presents a metadata object versioning schema. item 191 - metaobject, item 192 - immutable attributes of the object, item 193 - version 1 of object data, item 194 - version 2 of object data, item 195 - version 1 object property value, item 196 - version 1 object event implementation, item 197 - version 1 object procedure implementation, item 198 - version 2 object property value, item 199 - version 2 object event implementation, item 200 - version 2 object procedure implementation.

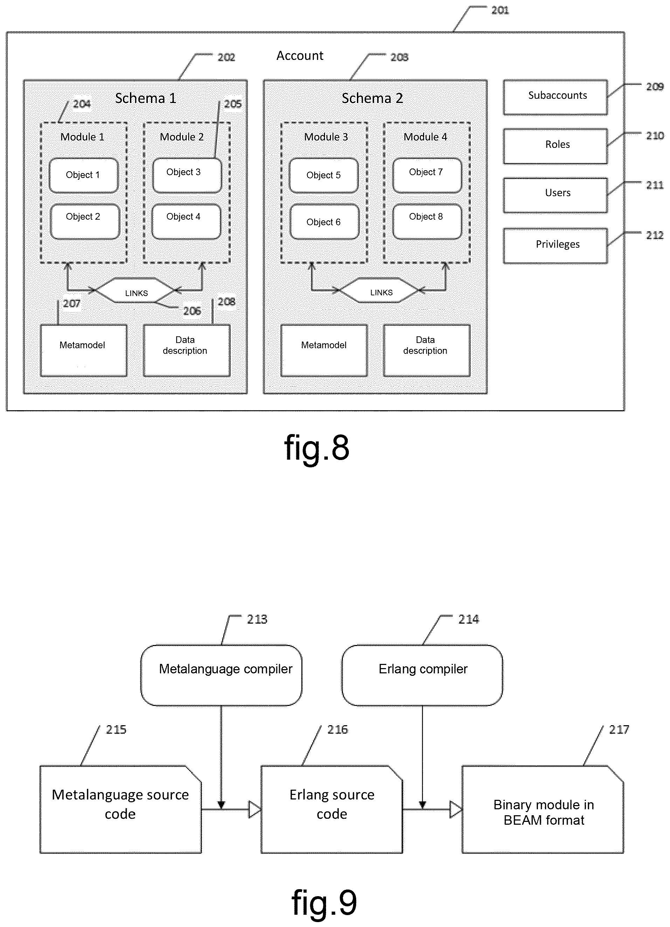

Fig. 8 presents a metainformation schema. item 201 - account, item 202 - schema 1, item 203 - schema 2, item 204 - module, item 205 - object, item 206 - links between objects, item 207 - metamodel, item 208 - data description, item 209 - subaccounts, item 210 - roles, item 211 - users, item 212 - privileges.

Fig. 9 presents the process of compiling the source code of the system's metalanguage. item 213 - metalanguage compiler, item 214 - Erlang compiler, item 215 - metalanguage source code, item 216 - Erlang source code, item 217 - binary module in BEAM format.

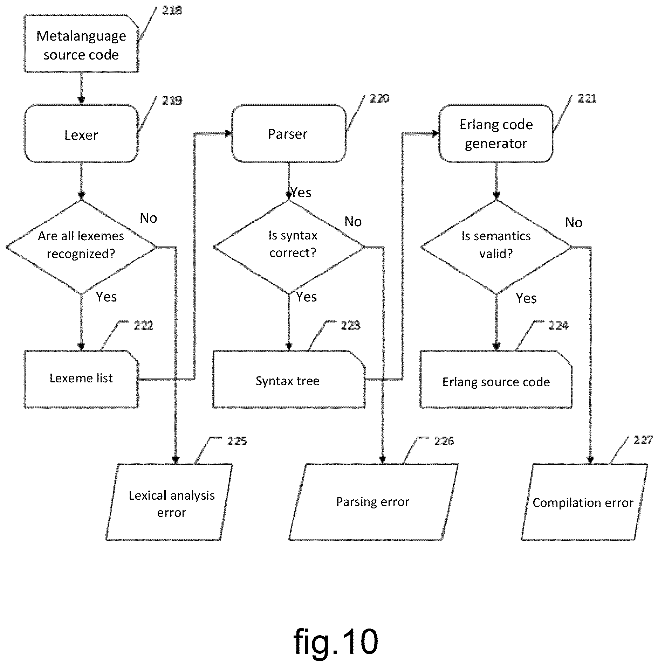

Fig. 10 presents a metalanguage compiler algorithm. item 218 - metalanguage source code, item 219 - lexer, item 220 - parser, item 221 - Erlang code generator, item 222 - lexeme list, item 223 - syntax tree, item 224 - Erlang source code, item 225 - lexical analysis error, item 226 - parsing error, item 227 - compilation error.

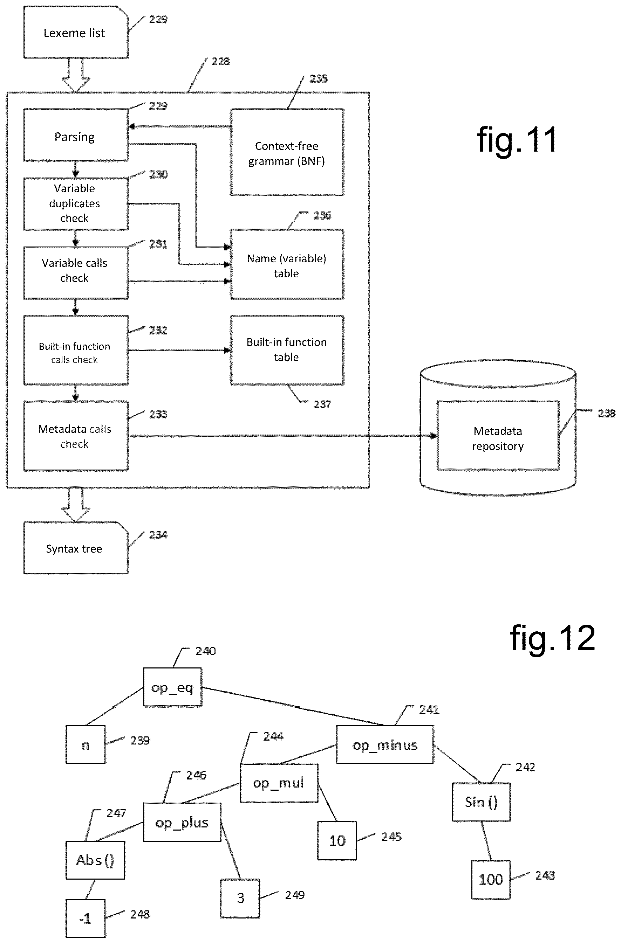

Fig. 11 presents a metalanguage parser schema. Item 228 - parser, item 229 - lexeme list, item 229 - parsing, item 230 - duplicate variable check, item 231 - variable calls check, item 232 - built-in function calls check, item 233 - metadata calls check, item 234 - syntax tree, item 235 - context-free grammar, item 236 - name (variable) table, item 237 - built-in function table, item 238 - metadata repository.

Fig. 12 presents an example of the syntax tree. Item 239 - variable N, item 240 - assignment operator, item 241 - subtraction operator, item 242 - sin() function, item 243 - number 100, item 244 - multiplication operator, item 245 - number 10, item 246 - addition operator, item 247 - abs() function, item 248 - number -1, item 249 - number 3.

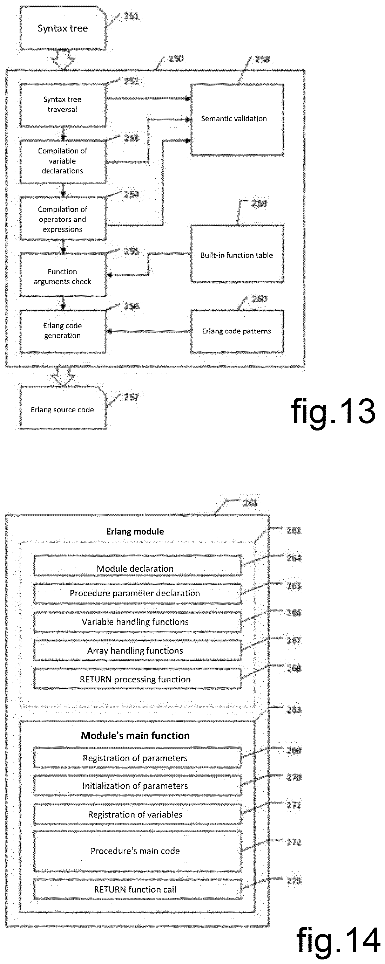

Fig. 13 presents the Erlang code generator schema. Item 250 - code generator, item 251 - syntax tree, item 252 - syntax tree traversal, item 253 - compilation of variable declarations, item 254 - compilation of operators and expressions, item 255 -function arguments check, item 256 - Erlang code generation, item 257 - Erlang source code, item 258 - semantic validation, item 259 - table of built-in functions, item 260 - Erlang code patterns.

Fig. 14 presents the Erlang module structure. +Item 261 - Erlang module, item 262 - preliminary declarations, item 263 - module's main function, item 264 - module declaration, item 265- procedure parameter declaration, item 266 - variable handling functions, item 267 - array handling functions, item 268 - RETURN processing function, item 269 - registration of parameters, item 270 - initialization of parameters, item 271 - registration of variables, item 272 - procedure's main code, item 273 - RETURN function call.

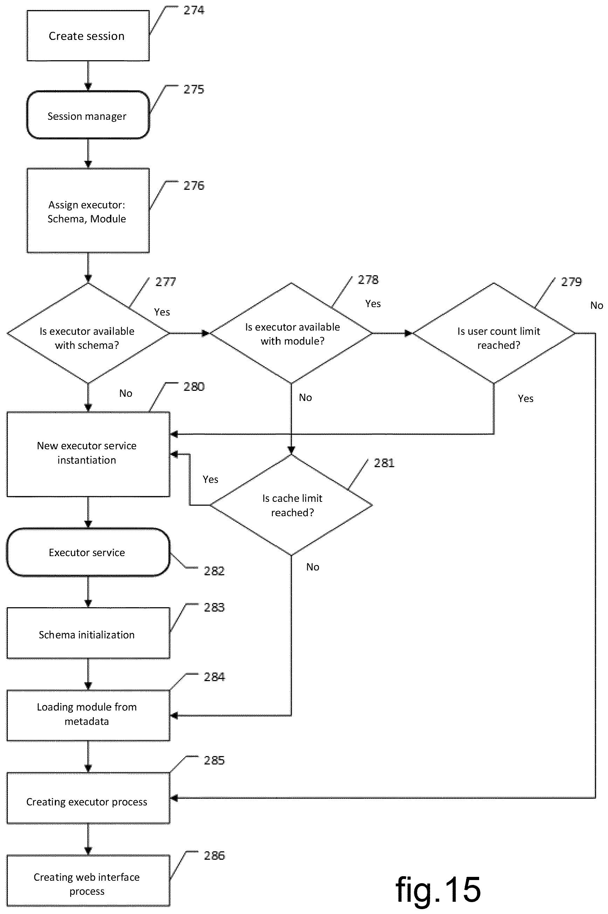

Fig. 15 presents the algorithm for creating a user session, item 274 - session request, item 275 - session manager, item 276 - request for executor, item 277 - check for executor with schema, item 278 - check for executor with module, item 279 - maximum user count check, item 281 - maximum cache capacity check, item 280 - new executor service instantiation, item 282- executor service, item 283 - schema initialization, item 284 - loading module from metadata, item 285 - creating executor process, item 286 - creating web interface process.

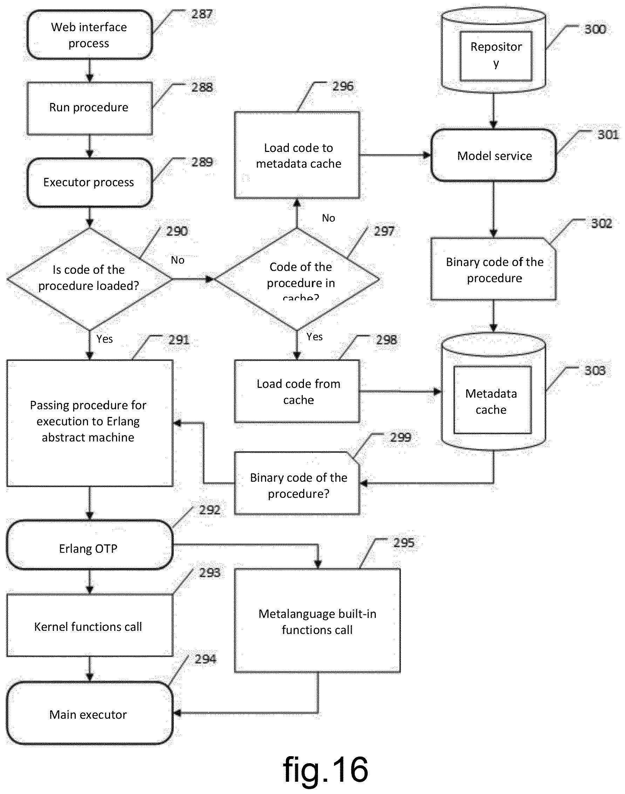

Fig. 16 presents the algorithm for executing the business logic procedure, item 287 - web interface process, item 288 - procedure execution initiation, item 289 - executor process, item 290 - procedure code check in the process, item 291 - procedure submission for execution, item 292 - Erlang OTP, item 293 - kernel functions call, item 294 - main executor, item 295 - metalanguage built-in functions call, item 296 - code loading into metadata cache, item 297 - procedure code check in the cache, item 298 - code loading from the cache into executor process, item 299 - procedure binary code, item 300 - system repository, item 301 - model service, item 302 - procedure binary code, item 303 - metadata cache.

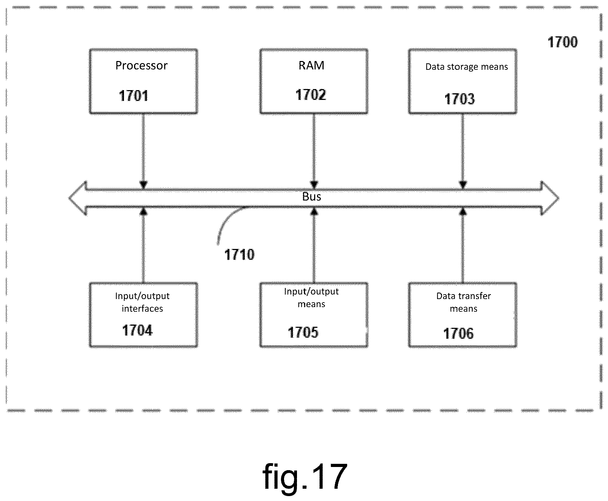

Fig. 17 presents a summary diagram of the computing device.

DETAILED DESCRIPTION OF THE INVENTION

The following detailed description of the invention's embodiment provides numerous details of the embodiment in order to ensure a clear understanding of the present invention. However, to those skilled in the art, it will be obvious how the present invention could be used, whether with or without these details of its embodiment. In other cases, the well-known methods, procedures, and components have not been described in detail to avoid overcomplicating the understanding of this invention's features.

In addition, the above presentation will make it clear that the invention is not limited to the presented embodiment. Numerous potential modifications, changes, variations, and substitutions, that retain the essence and form of this invention, will be obvious to those skilled in the art.

The proposed method and cloud system for developing and implementing web-based software applications rely on the representation of software applications in the form of metamodels stored in the system repository and executed on the computing device.

A cloud system for developing and implementing web-based software applications consists of microservices that communicate with each other through an API. The proposed cloud system provides high performance and horizontal scalability for simultaneous operation by a large number of users.

Fig.1 presents the generic architecture of the proposed system for developing and implementing web-based software applications.

According to the architecture, software applications are divided into two large parts - the software kernel (platform) 101 and the application part (metainformation) 106 stored in the repository 105. Metainformation is stored in a system repository organized in a relational database management system (DBMS) 104. The software kernel (platform) 101 consists of two major subsystems, including the application development platform 102 and the application runtime platform 103.

The application development platform 102 is in charge of providing tools for the developer to describe the application model in a platform format. Examples of such development tools include a system metadata navigator, a metaobjects attribute editor, a form editor for the objects interface, and a business logic procedure editor.

The application runtime platform 103 provides the mechanisms and resources to run applications as described in metadata. The execution platform uses application metadata stored in a metadata repository to load and execute applications, including the generation of application interface, communication with the user, and execution of business logic procedures.

In the metainformation 106, the description of applications consists of three main parts, including the description of the business objects interface 107, the description of the objects business logic 108, and the data description 109. The interface of applications business objects is described by a set of attributes and visual forms of objects. The business logic of objects is described using a built-in system metalanguage compiled in binary modules for execution. The application data description is defined by the data provider and characterized by a set of data sources, which may include different DBMS or web services.

Fig. 2 presents the detailed architecture of the proposed system.

The operation of the proposed system is based on the metamodel service 120, which provides storage and access to metadata in the system repository. The service consists of a relational database 124 which includes a system repository, and the metamodel 122 that enables all operations with the system repository and provides an external API to the repository that can handle multiple concurrent asynchronous queries. The use of API allows to disregard the data structure in the repository (in the relational database) and ensure independence from the method of metadata storage.

The main functions of the metamodel service in terms of handling the system repository include receiving metainformation on random requests to the repository; entering new metainformation; modifying existing metainformation; and deleting metainformation.

The metamodel ensures the integrity of metadata in all operations with metainformation.

In order to increase the system performance when there are many requests to the repository and to improve fault tolerance, the system has a metamodel configuration based on "master-slave" schema, where the main service ("master") is supplemented by several "slaves" and when the requests are made, the load can be distributed between all of these services. Fig.1 shows the "slave" service of the metamodel 121, which also has its own relational database 125 that contains a copy of the system repository. The databases of the main service and the "slave" service are synchronized (replicated) automatically, while the operations to change metainformation are available only in the main service, and requests to read metainformation are available in all services. If the main metamodel service fails for some reason, one of the "slave" services takes its place and becomes the main service, and all other services begin to synchronize with it. In this schema, the number of "slave" metamodel services is almost unlimited and is determined by the scaling requirements of the system.

The metadata management service 111 is designed to provide the system user with all necessary resources and tools for application development. The service is based on the web interface of the Application Designer, which provides the developers with a user-friendly interface to handle metadata. The Designer web interface communicates directly with the metamodel service through an external API to retrieve metadata and make changes to metadata.

The main functions of the service include the management and access control of business accounts and sub-accounts; management of system users, user roles, privilege list; management and access control of metadata schemas; management of metainformation (a set of classes and their descriptions, including attributes and behavior); user-friendly navigation through the applications (modules) and metadata objects in the selected schema; provision of metadata objects editors. The Designer web interface also implements a visual editor to build the interface forms of objects; and an editor for procedure source code and business logic events.

The service implements a mechanism for handling the versions of objects metadata, and metadata business objects can be translated into other languages to localize applications. The Designer's web interface also communicates with the cross-compiler service 113 to translate the source code of metalanguage procedures into executable binary code.

The metadata management service enables a large number of users to use the system concurrently by assigning a separate process to each user session.

The metadata management service implementation is also implemented in a way that enables horizontal scaling by launching additional services, between which the load balancer 114 will distribute the sessions.

The cross-compiler service 113 is used to translate the source code of procedures and events of the applications business logic (metalanguage) into executable binary modules that can be loaded and executed by the application executor service, and it is part of the application development system, along with the metadata management service, and can be used only via the Designer's web interface. The cross-compiler service provides an external API to call its methods and can process a large number of asynchronous requests simultaneously. When horizontal scaling is needed to handle even more requests, multiple compiler services can be started and the load balancer 114 will automatically distribute requests to these services.

The cross-compiler service 113 contains a lexer, a parser and an Erlang code generator. The compiler service receives the source text of the system's metalanguage procedures, as well as additional information needed for compilation, such as the module, object. The compiler ensures complete grammar parsing and syntax analysis of the input language constructs, and outputs compile-time errors. During compilation, the service communicates with the metamodel service 120 to obtain additional metainformation about the metadata objects used in the source code of the procedure, for example to validate the list and types of arguments of the invoked application procedure or object. If the metamodel service is not available to request from the compiler, the compilation process cannot be completed. When the compilation is successful, the compiler outputs binary code of the compiled procedure, compatible with the Erlang abstract machine, which is stored by the metadata management service in the system repository.

The session management service 115 contains a session manager 116 and a local table of sessions 117. The main function of the session manager is to provide the authentication of system users and their authorization to use system resources. The authentication and authorization is performed for any user who will use the subsystem for developing and executing applications. In other words, before a user can run, for example, Designer's web interface, the session management service must identify the user by his credentials (such as, login and password). For authentication, the session management service makes a request to the metamodel service, where all user accounts are stored. If authentication is successful, the service would authorize the user to start Designer's web interface with the parameters requested by the user, such as business account, schema metadata.

If authorization is successful, the service creates a session for the user and passes the session to the Designer's web interface, which then processes all incoming requests. If the user runs a business application from the system repository, the session management service creates the session, allocates the application executor resources and then forwards the session to the executor. The process of executor resource allocation includes the following steps: finding an executor service with the required metadata, initiating an additional executor service if necessary, initiating an executor service with the required metadata, and creating an executor process and Designer's web interface. Once a session is created, its information is recorded in the local table of sessions of the session manager. After the user finishes using the application, the information about the session is removed from the service's session table, and the allocated executor's and Designer's web interface processes stop.

In order to increase the performance of the session management service when there are many requests and to improve fault tolerance, the system has a service configuration based on "master-slave" schema, where the main service ("master") is supplemented by several "slaves" and when the requests are made, the load can be distributed between all of these services. The diagram shows a "slave" session manager 118, which also has its own local table of sessions 119 that includes a copy of the session table of the main session manager. The session tables of the "master" session manager and "slave" session manager are synchronized automatically. If "master" session manager fails for some reason, one of the "slave" services takes its place and becomes the main service, and all other managers begin to synchronize with it. The load balancer 114 serves to provide automatic load balancing between session management services as well as between metamodel services.

The executor service 134 provides the backbone of the application execution subsystem and ensures the launch and execution of business applications the descriptions of which are stored in the system repository.

The main components of the executor service include an executor core 135, metadata cache 136, web interface process 137 and executor process 138.

The executor core (140 Fig.3) consists of the main supervisor 141 (Fig.3), external API module 142, main executor 143 along with the built-in metalanguage functions, executor process supervisor 144, and web interface process supervisor 145. The external API 142 provides a set of methods for managing and using the runtime service, including methods for initializing the service, loading metadata, getting information about the service and its state, and executing business logic procedures. The main executor module 143 implements the main methods of service operation and contains the implementation of the built-in functions of the system's metalanguage. The supervisor of executors 144 is in charge of instantiating and managing the executor processes 147. The web interface supervisor 145 is in charge of instantiating and managing web interface processes 148.

The metadata cache 146 (Fig.3) is a software-controlled structure in the memory of the runtime service process and it is designed to store locally the metainformation required to run and execute the business applications of the runtime service. The executor core 140 implements the external API for the service and is also in charge of communicating with the metamodel service and session management service. Also, the executor core controls the internal processes of the server.

The metadata cache 146 (Fig.3) stores the metainformation related to the metadata schema (for example, the descriptions of providers and data sources), as well complete information on business objects of applications (modules) included in the schema. The cache can store metainformation that belongs to only one metadata schema. The use of local cache when running the executor allows to avoid the need to communicate with metamodel service for obtaining the metadata, which significantly improves performance and reduces the intensity of communications in the system.

The web interface service 137 (Fig.2) and executor process 138 are designed to support a separate session of the user that uses a business application in the system.

The executor process 147 (Fig.3) is generated by the supervisor of executors 144 in response to the request to the executor service from the session management service. The web interface service 148 is created by web interface supervisor 145 when a new user session is created at the time of starting a business application. A separate pair of runtime processes and web interface is always created for each session, which allows to completely isolate the execution of business applications for different sessions. During its operation, the web interface service 148 communicates with its own paired executor service 147, for example, when the application user takes certain steps, the web interface service may initiate the execution of a business logic procedure by using an executor process. Also, the executor process 147 communicates closely with the metadata cache, for example, when the information about a metaobject must be extracted during the execution of a business procedure. In this case, different executor processes may concurrently use the same dataset in the cache of the executor service, if these are the sessions of the same application. Therefore, a single executor service may support a great number of user sessions, if they relate to the same set of metadata schema applications.

The executor service is fully autonomous and, once initialized, it is virtually independent of the other services in the system, allowing for virtually unlimited horizontal scaling of the application runtime system to support a very large number of concurrent user sessions. The scaling is achieved by auto-instantiation of additional executor services required to support new users, depending on the current system load.

The services of external data providers 126 (Fig.2) and web service providers 130 are designed to support the use of external data by the application. At the core of the provider service is the corresponding provider (data provider 127 or web provider 131), as well as data source connectors 128 or web service connectors 132. Each connector is tailored to the relevant data source 129 or web service 133 and provides a low-level data protocol or service API to transmit data or commands to and from a data source or web service. A data or web service provider offers a unified data or service API for business applications, irrespective of the specifics associated with a particular data source or web service. The web service data providers are configured using the metadata management service, and the configuration data of providers is stored in metadata in the system repository and can be modified by the application developer at any time. The providers communicate with the executor processes of the application executor service by accepting commands from them to receive or modify data, or by transmitting received data.

The method for developing and implementing web-based software applications is described below.

The first stage in using the proposed method will be to describe the application's random business objects in metadata stored in a system repository (metamodel) within a relational database. The description is provided by metadata management service and the metamodel service using a procedural compiling type metalanguage, which supports the objects to implement complex business logic of applications, wherein the application objects are described based on the metamodel class descriptions.

The structure of repository data is designed to provide maximum flexibility with virtually no limitation on how to describe business objects, including the set of their properties (attributes), behavior (methods and events), structure and relationships. To address this task, a level of model abstraction was introduced in the form of objects classes (proto-objects), which define all the necessary structures and data to describe real-world business objects.

Fig. 4 describes the generic structure of metadata repository in the proposed system. The main parts of the repository include a metamodel 149, metadata 150 and configuration 151.

The metamodel 149 is used to describe the composition and structure of proto-objects metadata. This approach provides maximum flexibility with virtually no limitation on how to describe business objects, which allows to expand the basic set of metamodel classes as needed. The class description 152 includes a set of attributes 153 and their types 155 (as well as subtypes 156, when needed); behavior 154 as a set of methods and events of the class; a class structure, if the class is complex and contains nested classes.

The metadata 150 contains the description of the business objects 158 that are part of the applications (modules) 157. The description of each object 158 is built on the description of its class 152 in the metamodel 150. The set of properties 159 and their object types is explicitly defined by a set of the object class attributes. The values of object properties can be either scalar values of simple types or references to other objects or their properties. The set of business logic procedures 160 for an object is defined on the basis of behavior (methods and events) described in the class. The object data can be versioned, i.e., it is possible to store different variants of object property values created at different points in time.

The configuration 151 contains the structures needed to organize the entire system and provide the system users with access to it. The entire metainformation and, in particular, the configuration is divided by account 162. An account is a grouping of information based on access and it combines roles, users and their accounts, and includes schemas with all metadata. The schema 163 is yet another level to separate metadata based on its semantic attribute. A schema defines which metamodel is used within that schema and, accordingly, how metaobjects are described in that schema.

Fig.5 presents a structure for description of metamodel class. Classes may belong to one of two types: main class 167 or subclass 170. The main class can be used to describe business objects in the metadata. The subclasses are used to build the structure of complex (compound or nested) classes and can be used to describe business objects only as part of the main classes and not on their own.

Any class is described by a set of attributes 171, each of which has a specific type 172 and possibly a subtype 173. The attribute value type can be a simple scalar type (for example, numeric or text value) or it can be a reference to a value list element 174, another main class 168 or an attribute of a main class. A set of attributes explicitly defines which properties of a business object in a given class should be described and stored in metadata.

In addition to attributes, a class can have the descriptions of methods 176 and events 175. The aggregate of methods and events of a class determines the behavior of such class. A class method is a named predefined procedure that defines the operations allowed for an object of that class. Examples of class methods include creating new element, writing data, or deleting element. The method implementation is assigned to the class which means that the method procedures must be predefined for each class. The method procedures are invoked as a result of user communication with the application or by the software (using other business logic procedures). A class event is a named class procedure that is defined for a business object in metadata. Each class has its own set of events, which explicitly determines which events can be defined for the business object of that class, i.e. the event procedure is implemented in the business object rather than in the class. The object event procedures are invoked as a result of the user's communication with the application when a certain condition occurs (for example, a double click of the left mouse button).

A class structure, which is a hierarchical set of references to the subclasses that make up a specific class, is used to describe complex (nested) classes. In this case, the hierarchy means that each subclass used in the structure can also have nested subclasses. The structure of a class cannot include the classes of the main type, only the subclasses are allowed. The structure of the class determines which components make up a business object and how the object will be represented in metadata. For example, the main class "Document" may contain a subclass "Form". This structure allows to represent a business object of the "Document" class as a set of form objects that define a visual representation of that object.

A metamodel can be extended in two ways: by adding new classes or by inheriting an existing class. For a newly created class, it is necessary to define a set of attributes, events and methods, as well as the structure. Once the new class is described, this allows to create business objects of such class. The inheritance is used when a new class largely replicates an existing one with minor modifications. In case of inheritance, the child class gets all attributes, methods and events, as well as the structure of the parent class, and it is possible to add your own attributes, methods, events and to complement the class structure. In a child class, overriding attributes and methods, as well as the structure of the parent class, is not allowed.

Fig. 6 presents a method to describe a metaobject of the metadata based on the metamodel class definition. In this example, the class 171 has two defined attributes (179): attribute A1 (184) and attribute A2. In accordance with this definition, when creating the description of a metaobject 178 belonging to a given class, it is necessary to enter the values of the object properties 187 corresponding to the attributes A1 and A2. In this case, the value type (for example, for the object property A1 (187)) must correspond to the type and subtype of the class attribute A1 (184). In a metaobject, it is possible (but not required) to define the implementation of procedures for class events (180). The signatures of object procedures (procedure name, return type, list and types of arguments) must fully match the description of events in the class. For example, the implementation of the object event E1 (189) must meet the description of the class event E1 (185). Only those events that have been described in the class can be defined in an object. The object event procedures are implemented by using an object from the subclass "object event" 182 defined in the class structure. As described above, the class methods 181 must be implemented directly in the class. In this example, the class has two described methods 186: method 1 and method 2. Finally, according to the class definition in this example, an unlimited number of business logic procedures can (but are not required to) be defined in the metaobject. The procedures are not described in the class in advance. The object procedures are implemented by using an object from the subclass "object procedure" 183 defined in the class structure.

The mechanism for storing objects in the metadata repository allows for versioning (optional). Fig. 7 describes the versioning schema for metaobject data. In this case, all data in the metaobject 191 is divided by non-versioned and versioned parts.

The non-versioned part of an object contains immutable attributes 192, such as class, reference to the parent object, and it is used to implement references to objects and establish links between objects. The object data, which may change as a result of developing (modifying) the object, is placed in the versioned part (193, 194).

The versioned part contains the object property value 195, object procedure implementation 196, and object procedure implementation 197. An object version is a set of versioned data of the object stored in the metadata repository with a unique identifier (number) of the version.

If the system is running in non-versioned mode, all changes to the object data are recorded with the version number 0 (and the old data is not retained). If the versioning is enabled, the modified object data 194 is recorded with a new version number, while the old object data 193 is also stored with the previous version number.

To start modifying an object in the versioning mode, it is necessary to perform a checkout operation (to take the object for editing), wherein the current (up-to-date) version of the object is locked for modifying by other users, and a new object version is created, where the changes can be introduced. As soon as the changes are complete, a check-in procedure is performed, as a result of which a new object version becomes current, and the previous version is unlocked.

Each version of a metaobject can belong to a specific branch. Within one branch, all object versions are saved sequentially, but different branches may save different object versions in parallel. Only one version within a branch can be current (this is the latest version in the branch). In addition to the current version attribute, the versions can be marked with the "working" version attribute. A working version is a stable and tested version of an object that can be used for running in an application. Only one working version of an object can be installed (it does not necessarily has to be the same as the current version).

The proposed cloud system and method can run in SaaS mode. To enable the system for developing and implementing the applications to operate in a mode that allows its concurrent use by many users, it is necessary to provide a reliable method for dividing the metainformation into such elements, as the metamodel, metadata, and configuration. Fig. 8 explains the method for dividing the metainformation in the system.

The basis for division is an entity called "account" 201. In this case, the account means a non-personal account of a registered business user of the system. Within the main account, subaccounts 209 can be created as subordinates to the main account. An account must contain at least one personal user profile 211, and the number of user profiles is not limited. Each user profile can be assigned a specific role 210 and a set of privileges 212. An important feature of this division method is that, within an account, the users, their roles and privileges are defined in isolation, i.e., they are independent of the users, roles and privileges of another account.

The next level of dividing the metainformation is an entity designated as "schema" (202, 203). A schema combines related information of the metamodel and the metadata, such as class descriptions, data, and metaobjects. With this approach, each schema contains its own metamodel (a description of classes or proto-objects), which ensures independence from other schemas even within the same account and allows to safely expand or change the metamodel without risking an unexpected change in the description of the business objects in the other schema. The schema also serves as a "container" for applications developed and executed on the platform, and it is designated by the term "module" 204. An application (module) is an aggregate of business objects 205, each of which can belong to only one module. To ensure the ability to reuse the business objects of one module in other modules, a mechanism of links between modules 206 is activated by creating the references to objects. The links (references to objects) may be created only between the modules within one schema. A schema also contains the description of external data sources 208 required for applications to run. The data sources can be used by any application (module) within the same schema. Therefore, the modules are grouped into schemas based on a functional attribute (linked business objects) and on the principle of using shared data.

As mentioned above, the development of web-based software applications relies on describing random business objects of the application in metadata by using a procedural compiling type metalanguage and supports objects to implement complex business logic of applications. The language's grammar is built in a way that allows to directly use the objects from the metadata of applications, as well as to effectively use the data from external sources. The entire code of the business logic of the applications is divided into separate procedures or event handlers and linked to the business objects in the metadata. This allows to use the metaobject context in the procedure, such as, a reference to the current form of the object data, and gain direct access to the data in the form. Therefore, the language can be used in the runtime mode to manipulate the data handled by the user of the application, and even to intervene in the data processing or the metaobject's behavior.

The general structure of the metalanguage grammar is represented by three main blocks: syntax elements of the language, data organization, and data processing.

The syntax elements of the language include syntax constructs, such as, the comments (//, /**/), literals (1, 's', "s"), brackets ([],(),{}) , as well as the keywords that are used when writing code in the metalanguage.

The data organization includes information of data types (any, integer, string, etc.), data storage structure and objects. The metalanguage is a strictly typed language. This means that the values of different types cannot be used in expressions without specifying the type, and only the values that correspond to the definition of the type function can be passed as arguments to the function.

The data is processed using the arithmetic operations (+, ++, -, -, *, /, ^), assignment operators (=, +=, -=, *=, /=), branching operators (IF, THEN, ELSE, CHOOSE, CASE, RETURN), logical operations (=, <>, >, <, >_, <_, NOT, AND, OR, ANDALSO, ORELSE), loop operators (FOR - NEXT, DO - LOOP, CONTINUE, EXIT), error handling operators (THROW, TRY - CATCH, FINALLY), object handling operators (CREATE, DESTROY, FUNCTION, EVENT, CALL), SQL operators (CONNECT, DISCONNECT, SELECT, INSERT, UPDATE, DELETE, COMMIT, ROLLBACK, OPEN, CLOSE, FETCH, EXECUTE), as well as built-in functions (built-in functions, conversion functions, string functions, numeric functions, date-time functions, array functions, miscellaneous functions).

The language supports calls to other procedures of metamodels as well as recursive calls.

The second stage of the proposed method is to convert the described metadata represented as a set of metaobjects containing properties, nested objects, as well as the source code of metalanguage that implements the object events and procedures, into the Erlang code, which is subsequently compiled into executable binary code for the Erlang abstract machine (BEAM) by using a cross-compiler service.

Fig.9 presents the generic process of compiling the source code of the system's metalanguage procedures into BEAM binary files. On input, the compiler receives the metalanguage source code 215. The metalanguage compiler 213 analyzes it and converts into text that fully meets the requirements of Erlang syntax and implements the same logic. The metalanguage compiler converts syntax constructs and function calls into corresponding Erlang constructs and function calls to produce the resulting Erlang code 216. Then, the standard Erlang compiler 214 is used to convert the Erlang source code into a binary module in BEAM format 217.

The operation of the metalanguage cross-compiler will be described below with reference to Fig.10.

As mentioned above, the cross-compiler consists of 3 main modules: lexer 219, parser 220 and Erlang code generator 221.

On input, the lexer 219 receives the text of the metalanguage source code 218, the lexer 219 checks the input against the language grammar and, following the analysis, outputs a list of recognized language lexemes 222.

The lexer 219 analyzes the input stream of metalanguage source code based on the grammar rules. Each type of lexeme is described as a regular expression pattern. The lexer 219 differentiates between ignored characters (space, line terminator, comment), string and numeric literals, date and time values, identifiers, comparison operators, logical operators, arithmetic operators, brackets, and keywords. The lexemes produced by lexer are represented as tuples. The lexeme format returned by the lexer is as follows:

{token, line number, character(s)}.

If, during the source code analysis, the lexer cannot recognize a lexeme, it returns error 225 indicating the line number of the source code, and the compilation process stops.

If all lexemes of the input stream are parsed correctly, the lexer outputs a list of parsed lexemes, and the compilation process continues. The list of lexemes is sent to the input of parser 220, which parses the lexemes by checking the lexemes and their order against the language syntax definition.

The parser (228, Fig.11) parses the list of lexemes 229 from the input stream by converting them into a syntax tree 234 based on the definition of grammar rules. The syntax of metalanguage constructs is specified using context-free grammar 235 or BNF (Backus-Naur Form) notation, in the form of grammatical inference rules (productions). In addition to checking whether the order of lexemes matches the grammatical inference (syntax) rules, the parser performs several other important steps, such as:

1. maintaining a variable table 236;
2. checking for duplicates when declaring variables 230;
3. checking that a variable is declared before its use;
4. checking the dimensions of arrays when declaring them during the initialization;

5. checking whether a variable and an array element are called correctly 231;
6. validating calls to built-in functions, including the number of arguments 232;
7. validating calls to application metadata objects 233.

If an incorrect syntax construct is found in the process of parsing, the parser 220 outputs an error message 226 indicating the line number of the source code, and the compilation process stops. If the list of lexemes is parsed successfully, the parser outputs the syntax tree of parsed lexemes 223, which is passed to the input of the Erlang code generator 221.

Fig. 12 presents a method of representing the following arithmetic expression as a syntax tree after the metalanguage is processed by the parser:

$$n = (abs(-1) + 3 ) * 10 - sin(100),$$

The lexical analysis and syntactic parsing result in the following syntax tree of tuples:

```
{2,stmt_assign,
 {2, var, num ber,local, write, n, []},
 op_eq,
 {2,op_minus,
  {2,op_mul,
   {2,op_plus,
   {2,function, number,abs,[number],[{2,unary_minus,{2,integer,1}}]},
   {2,integer,3}},
   {2,integer,10}},
  {2,function,number,sin,[number],[{2,integer,100}]}}}}.
```

The code generator 221 performs a top-down traversal of the syntax tree 223 by conducting semantic analysis and various additional checks, for example, on whether the types are matched in the expressions. For each syntax construct, the code generator performs a conversion to the target language (Erlang).

The code generator 250 (Fig.13) receives the syntax tree of tuples 251 as input and generates a source code in Erlang 257 as an output. The code generator performs a top-down traversal 252 of the syntax tree by performing semantic validations 258 at each step. In the process of syntax tree traversal, the generator compiles variable declarations 253 or compiles operators and expressions 254. The semantic validations during the compilation of variable declarations and arrays include checking the initialization of expressions. The semantic validations during the compilation of operators and expressions include additional checks of syntax, as well as the check of expression types, and the check of whether the types are matched in the expression operands. During the compilation of function calls 285, all actual arguments to be passed are also checked against the argument types of the relevant function in accordance with the table of built-in functions 259. Erlang code generation 256 is based on predefined Erlang code patterns 260.

If, during the traversal of syntax tree 223, the code generator 221 detects an error (for example, a type mismatch in an expression), it outputs a compilation error 227 indicating the line number of the source code, and the process stops.

If the traversal of syntax tree 223 is successful, the code generator 221 will output Erlang source code 224, which can be used for compilation into binary format.

The module of the generated Erlang code 261 is shown in Fig.14. The entire code of the module consists of two major parts: the preliminary declarations 262 and the module's main function 263. The preliminary declarations include the module declaration 264, procedure parameter declaration 265, variable handling functions 266, array handling functions 267, RETURN processing function 268. The module declaration contains a metalanguage procedure name, which is translated into an Erlang module. The parameter declaration contains a list of identifiers and parameter types of the metalanguage procedure which are translated into an Erlang module. The variable handling functions are auxiliary functions that are used to get or set the values of local procedure variables in a module. The array handling functions are auxiliary functions that are used to get or set the values of local procedure arrays in a module, including by calling the elements of arrays. The RETURN processing function is needed to correctly terminate the main function of the module and to pass the return value of the procedure, as well as to set the values of parameters passed by reference.

The main function of the module starts by registering the parameters 269 of the procedure in the variable table of the module. The next step involves calling the initialization function of parameters 270. The initialization function 270 is in charge of setting parameter values based on the actual arguments passed to the procedure (in this case, to the main Erlang function) when it is called. The next is the section for registering the local variables 271 of the procedure in the variable table of the module. During the registration, the variables are always initialized with either the value specified in the variable declaration or the default value for a particular type of variable (for example, for a string variable it is an empty string, for a numeric variable it is 0). The next is the section of the main code 272, which is generated when compiling the source code of the metalanguage procedure. The RETURN processing function 273 is called at the end of the module function. This function is invoked always, regardless of whether it was specified in the source code of the metalanguage procedure, and even if the metalanguage procedure does not return any value. The RETURN processing function 268 sets the values of the input parameters passed by reference, deletes the variable table of the module and passes the return value of the procedure (if any) to the calling function.

The obtained executable binary code is recorded in the system repository.

The third stage of the proposed method is that, after running the resulting application, a session management service is used to create a session and search for the executor service with the required metadata, initiate the executor service with the required metadata, and create the executor process and the web interface.

When receiving a new session request 274 (Fig. 15), the session management service 275 makes an attempt to allocate an executor for that session based on the schema identifier and module (application) identifier parameters in accordance with the algorithm described below. A search is conducted for a running executor service with such schema (276). When there is no executor service with the desired schema, a new executor service is instantiated (280, 282), and then the service initializes the desired schema (283). If a service with the desired schema is found, then a check is conducted on whether the desired module is loaded in the metadata cache of that service (278). If the module is loaded, the next check determines whether the limit on the number of concurrent users is not exceeded in the service (279). If the limit is reached, then a new executor service is instantiated and the schema is initiated. If the maximum user count is not reached, then the new executor processes and a web interface for the session are created in that service, as the module is already loaded in the service. But, if at the previous step the module check shows that the module is not loaded, it is necessary to check whether the service exceeded its maximum cache capacity (281). If the limit is reached, it is necessary to instantiate a new executor service. If the limit is not reached, it would be sufficient to load the module to the metadata cache of the service and then create executor processes and web interface for the session. This will complete the process of creating a session.

The final step of the proposed method is that the binary code is run and executed from the system repository by using the executor service, wherein the binary code is executed directly on the Erlang abstract machine.

On Fig.16, the web interface process 287 initiates the procedure execution 288, after which it makes the request for the executor process 289. The executor process checks whether the binary module (binary code) of the procedure is loaded in the executor process (290). If the binary code is not loaded, the executor process calls the local metadata cache 303, which checks whether the binary code of the procedure is loaded to the cache (297). If the binary code is not loaded to the cache, the executor service requests the model service 301 to load it from the system repository 300, after which the metadata cache can return the desired code to the executor process. Once the procedure's binary code (binary module) is loaded to the executor process, it passes it for execution to the Erlang abstract machine (291). From that moment, the execution of the binary module is entirely and completely controlled by Erlang OTP 292 and the binary module code 299. Nevertheless, the binary module code may have the kernel functions call 293 or metalanguage built-in functions calls 295, which are processed by the main executor of the service 294.

Fig.17 presents a summary diagram of the computing device (1700), which ensures the data processing and is required for implementing the claimed solution.

In general, the device (1700) comprises such components as: one or more processors (1701), at least one memory (1702), data storage means (1703), input/output interfaces (1704), input/output means (1705), networking means (1706).

The device processor (1701) executes main computing operations required for the device's functioning (1700) or for functionality of one or more of its components. The processor (1701) runs the required machine-readable commands contained in the random-access memory (1702).

The memory (1702) is typically provided in the form of RAM and comprises the necessary program logic, which ensures the required functionality.

The data storage means (1703) can be made in the form of HDD, SSD, RAID, networked storage, flash memory, optical drives (CD, DVD, MD, Blue-Ray disks), etc. The means (1703) enables the long-term retention of different information, such as the above-mentioned files with user data sets, databases containing the records of time intervals measured for each user, user IDs, etc.

The interfaces (1704) are the standard means for connecting and using the server side, such as USB, RS232, RJ45, LPT, COM, HDMI, PS/2, Lightning, FireWire, etc.

The selection of interfaces (1704) depends on the specific embodiment of the device (N00), which may be a PC, mainframe, server cluster, thin client, smartphone, laptop, etc.

Any embodiment of the system for the described method must use a keyboard as its input/output means (1705). The keyboard can have any known hardware design: it can be a built-in keyboard used on a laptop or netbook, or a stand-alone device connected to a desktop, server or other computer device. In this case, the connection can be wired, where the keyboard's connecting cable is connected to PS/2 or USB port located on the system unit of a desktop computer, or it can be wireless, where the keyboard exchanges data over a wireless channel, such as a radio channel, with the base station which, in turn, is directly connected to the system unit, for example, via a USB port. In addition to the keyboard, the following can also be used as the input/output means: a joystick, display (touch-screen display), projector, touch pad, mouse, trackball, light pen, loudspeakers, microphone, etc.

The networking means (1706) is selected from a device that enable receiving and sending data over a network, such as such as an Ethernet card, WLAN/Wi-Fi module, Bluetooth module, BLE module, NFC module, IrDa, RFID module, GSM modem, etc. The means (1705) enables data exchange via a wired or wireless data channel, such as WAN, PAN, LAN, Intranet, Internet, WLAN, WMAN or GSM.

The components of the device (1700) are interfaced via a common data bus (1710).

These application materials disclosed the preferred embodiment of the claimed technical solution, which should not be used to limit its other, particular embodiments that are within the scope of the claimed legal protection and are obvious to those skilled in the relevant art.

## Claims

1. A cloud system for developing and implementing web-based software applications, which consists of microservices that communicate with each other through an API, wherein the said microservices are as follows:

   a metamodel service including a metadata repository, and a metamodel interface service, wherein the said metamodel service can be augmented with at least one master-slave service for load balancing of queries;
   a metadata management service comprising a web interface to handle metadata and communicates with the metadata service to receive and modify metadata, designed to provide user-friendly tools for handling metadata that make up the configuration of application modules; an implementation of a visual editor for building application interface forms; a visual editor for metalanguage source code; an implementation of mechanisms for handling versions of metadata described in the metalanguage, tools for translating metadata into other languages to localize applications;
   a metalanguage cross-compiler service designed to allow translation of the metalanguage source code that represents the business logic description of an application object into Erlang code, a compilation of the resulting Erlang code into binary code for the Erlang abstract machine, which can be loaded and executed by the application runtime service;
   a session management service designed to allow user authorization, session creation, executor service search with required metadata, executor service initiation with required metadata, executor process and web interface creation, and augmentation with at least one master-slave service for load balancing of queries;
   an application executor service designed to allow the loading and execution of applications stored in the system repository as a set of complex metaobjects, including a business logic description in the form of compiled binary code, within a particular user session, and which can be augmented by at least one service for load balancing of queries;
   an external data interface service designed to allow using external databases and web services;
   an external API service of the system.

2. A system according to claim 1 and **characterized in that** the metalanguage cross-compiler contains a lexer, parser and Erlang code generator.

3. A system according to claim 1 and **characterized in that** the application executor service contains an executor core, a metadata cache, a web interface and runtime processes that are dynamically created on demand.

4. A system according to claim 1 and **characterized in that** the external data interface service is designed to allow using external databases through connectors tailored to the specifics of the relevant data source.

5. A system according to claim 1 and **characterized in that** the external data interface service is designed to allow a unified API to handle data or web services.

6. A method for developing and implementing web-based software applications, which includes the following stages:

   application objects are described as metadata stored in a metadata repository, through a metadata management service and a metamodel service, using a compiling type metalanguage, wherein the application objects are

EP 4 242 830 A1

described based on the metamodel class descriptions;

described metadata presented as a set of metaobjects containing properties, nested objects, and the source code of the metalanguage that implements the events and procedures of the object are converted into the Erlang code, wherein the source code of the metalanguage is compared with the language grammar and the list of lexemes is generated in the recognized language, and the obtained list of lexemes is syntactically parsed, and a syntax tree is built after parsing the lexemes, and a semantic analysis is carried out on the syntax tree built after parsing the lexemes, and the Erlang code is obtained by converting the source code of the metalanguage, and the obtained Erlang code is compiled into executable binary code for the Erlang abstract machine; and the resulting executable binary code is written to the system repository;

after running the resulting application, a session management service is used to create a session and search for the executor service with the required metadata, initiate the executor service with the required metadata, and create the executor process and the web interface;

binary code is run and executed from the system repository by using the executor service, wherein the binary code is executed directly on the Erlang abstract machine.

7. A method according to claim 6, **characterized in that** a metamodel includes classes, subclasses, attributes, behavior, types and subtypes.

A method according to claim 6, **characterized in that** the description of object classes includes additional classes and inheritance of existing classes.

8. A method according to claim 6, **characterized in that** the description of object classes includes additional classes and inheritance of existing classes.

fig.1

fig.2

fig.3

fig.4

fig.5

fig.6

Metaobject — 191

Immutable attributes — 192

193

A1' property value — 195

A2' property value

E1' event implementation — 196

E2' event implementation

P1' procedure implementation — 197

P2' procedure implementation

**Version 1**

194

A1'' property value — 198

A2'' property value

E1'' event implementation — 199

E2'' event implementation

P1'' procedure implementation — 200

P2'' procedure implementation

**Version 2**

N
Check-Out

N+1
Check-In

fig.7

fig.8

fig.9

Metalanguage source code — 218

Lexer — 219

Are all lexemes recognized? — No / Yes

Lexeme list — 222

Parser — 220

Is syntax correct? — Yes / No / Yes

Syntax tree — 223

Erlang code generator — 221

Is semantics valid? — Yes / No / Yes

Erlang source code — 224

Lexical analysis error — 225

Parsing error — 226

Compilation error — 227

fig.10

Lexeme list 229

228

229 Parsing

235 Context-free grammar (BNF)

230 Variable duplicates check

231 Variable calls check

236 Name (variable) table

232 Built-in function calls check

237 Built-in function table

233 Metadata calls check

238 Metadata repository

234 Syntax tree

fig.11

fig.12

240 op_eq

239 n

241 op_minus

244 op_mul

242 Sin ()

246 op_plus

245 10

243 100

247 Abs ()

249 3

248 -1

fig.13

fig.14

274 — Create session

275 — Session manager

276 — Assign executor: Schema, Module

277 — Is executor available with schema? — Yes → 278 — Is executor available with module? — Yes → 279 — Is user count limit reached? — No

277 No → 280 — New executor service instantiation

278 No → 281 — Is cache limit reached?

279 Yes → (to 280)

281 Yes → (to 280)

281 No → 284 — Loading module from metadata

280 → 282 — Executor service

282 → 283 — Schema initialization

283 → 284 — Loading module from metadata

284 → 285 — Creating executor process

279 No → 285 Creating executor process

285 → 286 — Creating web interface process

fig.15

24

Web interface process — 287

Run procedure — 288

Executor process — 289

Is code of the procedure loaded? — 290

Load code to metadata cache — 296

Repository — 300

Model service — 301

Binary code of the procedure — 302

No

Code of the procedure in cache? — 297

No

Yes

Yes

Passing procedure for execution to Erlang abstract machine — 291

Load code from cache — 298

Metadata cache — 303

Binary code of the procedure? — 299

Erlang OTP — 292

Metalanguage built-in functions call — 295

Kernel functions call — 293

Main executor — 294

# fig.16

fig.17

## INTERNATIONAL SEARCH REPORT

| | |
|---|---|
| | International application No. |
| | PCT/RU 2020/000595 |

**A. CLASSIFICATION OF SUBJECT MATTER**

G06F 8/20 (2018.01)  G06F 8/30 (2018.01)  G06F 9/44 (2018.01)

According to International Patent Classification (IPC) or to both national classification and IPC

**B. FIELDS SEARCHED**

Minimum documentation searched (classification system followed by classification symbols)

G06F 8/00, 8/10, 8/20, 8/30, 8/35, 9/00, 9/06, 9/44, 7/00, 11/00, 11/36, 17/00

Documentation searched other than minimum documentation to the extent that such documents are included in the fields searched

Electronic data base consulted during the international search (name of data base and, where practicable, search terms used)

PatSearch (RUPTO Internal), USPTO, PAJ, Espacenet, Information Retrieval System of FIPS

**C. DOCUMENTS CONSIDERED TO BE RELEVANT**

| Category* | Citation of document, with indication, where appropriate, of the relevant passages | Relevant to claim No. |
|---|---|---|
| A | US 2013/0104100 A1 (SAP AG) 25.04.2013, paragraphs [0015], [0025], [0039], [0045], [0069] | 1-8 |
| A | US 10324690 B2 (VERMEG SERVICES SARL) 18.06.2019 | 1-8 |
| A | US 7735062 B2 (OUTSYSTEMSEM REDE, S.A.) 08.06.2010 | 1-8 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 July 2021 (14.07.2021) | 29 July 2021 (29.07.2021) |

| Name and mailing address of the ISA/    RU | Authorized officer |
|---|---|
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10324690 B2

- US 7735062 B2